(19) Europäisches Patentamt
European Patent Office
Office européen des brevets

(11) **EP 4 700 598 A1**

(12) **EUROPEAN PATENT APPLICATION**

(43) Date of publication:
**25.02.2026 Bulletin 2026/09**

(21) Application number: **25183746.4**

(22) Date of filing: **18.06.2025**

(51) International Patent Classification (IPC):
**G06F 16/245** (2019.01)   **G06N 3/00** (2023.01)

(52) Cooperative Patent Classification (CPC):
**G06F 16/24569; G06N 3/00; G06N 3/044;
G06N 3/045; G06N 3/0464; G06N 3/048;
G06N 3/049; G06N 3/063; G06N 3/065;
G06N 3/0675; G06N 3/08; G06N 3/084; G06N 3/09**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.08.2024   US 202463684581 P
17.06.2025   US 202519241117**

(71) Applicant: **GE Aviation Systems LLC
Grand Rapids, MI 49512 (US)**

(72) Inventors:
• **LIN, Yizhen**
  **Grand Rapids, 49512 (US)**
• **REIMANN, Johan Michael**
  **Grand Rapids, 49512 (US)**
• **CALBAZA, Dorin Emil**
  **Grand Rapids, 49512 (US)**
• **MACDONALD, Robert James**
  **Grand Rapids, 49512 (US)**
• **YANG, Zhihui**
  **Grand Rapids, 49512 (US)**

(74) Representative: **Openshaw & Co.
8 Castle Street
Farnham, Surrey GU9 7HR (GB)**

(54) **ANALOG SYSTEM FOR EDGE ARTIFICIAL INTELLIGENCE COMPUTING**

(57)      An analog system for edge artificial intelligence computing includes a first plurality of analog edge devices (102) configured to receive an input analog signal (100) and to output a first plurality of output analog signals (103), a second plurality of analog edge devices (104) configured to receive the first plurality of output analog signals (103) and to output a second plurality of output analog signal (105), and one or more memory devices (208) in communication with the first plurality of analog edge devices (102) and the second plurality of analog edge devices (104), and configured to store weight parameters, the weight parameters being adjustable based on time constants of the first plurality of analog edge devices (102) or the second plurality of analog devices (104), or both. The second plurality of output analog signals (105) are multiplied by the weight parameters to obtain a plurality of weighted analog signals.

FIG. 1

EP 4 700 598 A1

**Description**

CROSS REFERENCE TO RELATED APPLICATIONS

The present application claims the benefit of U.S. Provisional Patent Application No. 63/684,581, filed on August 19, 2024, and to U.S. Patent Application No. 19/241,117, filed on June 17, 2025, which are hereby incorporated by reference herein in their entirety.

GOVERNMENT LICENSE RIGHTS

This invention was made with government support under 2022-21102100011 awarded by IARPA. The government has certain rights in the invention.

TECHNICAL FIELD

The present disclosure relates generally to an analog system for edge artificial intelligence computing.

BACKGROUND

Artificial Intelligence (AI) computing at the edge is often limited by size, weight, and power (SWaP). Existing approaches, based on digital computers, are inefficient for edge AI computation. The power-intensive technologies used for training AI models in data centers are generally not suitable for edge applications. Many of the edge applications require interpreting and reasoning over analog data. Existing approaches, based on digital computers, are highly inefficient due to the analog-to-digital conversion (ADC) and digital-to-analog (DAC) burdens, and other processing bottlenecks inherently present in a von Neumann architecture. Instead of building better graphics processing units (GPUs) or smaller transistors, a new approach to designing AI hardware for edge computing is needed. Another problem of particular interest is in-situ training for edge applications. A conventional stochastic gradient descent (SGD) learning approach relies on error backpropagation through multiple layers of neural network, which is very difficult to implement in analog hardware.

BRIEF DESCRIPTION OF THE DRAWINGS

Features and advantages will be apparent from the following, more particular, description of various exemplary aspects, as illustrated in the accompanying drawings, wherein like reference numbers generally indicate identical, functionally similar, and/or structurally similar elements.

A full and enabling disclosure of the present description, including the best mode thereof, directed to one of ordinary skill in the art, is set forth in the specification, which makes reference to the appended figures, in which:

FIG. 1 is a network architecture of micro-electro-mechanical systems (MEMS) devices in a neural network used for reducing noise in an input analog signal or denoising an input analog signal, according to an aspect of the present disclosure.

FIG. 2 is an electronic circuit showing the interconnection among a plurality of analog edge device (e.g., MEMS) for implementing an analog system for edge artificial intelligence using a neural network and a one or more field programmable analog arrays (FPAAs), according to an aspect of the present disclosure.

FIG. 3 is a schematic diagram of an example MEMS device, according to an aspect of the present disclosure.

FIG. 4 is a schematic diagram of a MEMS device used as a neuron to implement the neural network, according to an aspect of the present disclosure.

FIG. 5 is a plot depicting a noisy input analog signal, a denoised output analog signal, and a comparison ground truth analog signal, according to an aspect of the present disclosure.

FIG. 6 is a flow diagram of a machine learning algorithm (e.g., a continuous time autoregressive recurrent neural network (CTRNN)) using a neural network for solving ordinary differential equations, according to an aspect of the present disclosure.

FIG. 7 is a schematic diagram showing an example implementation of a multi-layer hierarchical difference target propagation for MEMS CTRNN in-situ training, according to an aspect of the present disclosure.

FIG. 8 is a flow diagram showing details of a difference target propagation scheme used by the CTRNN, according to an aspect of the present disclosure.

DETAILED DESCRIPTION

Features, advantages, and aspects of the present disclosure are set forth or apparent from a consideration of the following detailed description, drawings, and claims. Moreover, the following detailed description is exemplary and intended to provide further explanation without limiting the scope of the disclosure as claimed.

Various aspects of the present disclosure are discussed in detail below. While specific aspects are discussed, this is done for illustration purposes only. A person skilled in the relevant art will recognize that other components and configurations may be used without departing from the present disclosure.

A MEMS analog edge device is provided that can perform edge artificial intelligence (AI) computing at relatively lower power and relatively higher speed (for example, greater than hundreds of times lower in power and greater than hundreds of times faster in speed) when compared with existing digital computing architectures. The term "MEMS device" is used broadly to include mechanical MEMS devices, opto-acoustic MEMS devices, ferro-electric MEMS devices, etc. The term "edge" is used herein throughout to mean a computing device at an edge or an end of a network architecture near the user, such as a cellphone, a sensor (e.g., an image sensor, a sound sensor, a radiation or light sensor, etc.), a controller for a machine, an unmanned aerial vehicle (UAV), or other network connected devices, etc. Analog computing is especially powerful for edge AI applications where size, weight, and power (SWaP) plays an important role. In addition, analog computing is especially powerful for edge AI applications where most of the data collected is produced by analog edge devices (e.g., analog sensors). By performing AI computing in the analog domain, the need for two-way analog-to-digital conversion (ADC) and digital-to-analog conversion (DAC) can be eliminated. In addition, analog continuous-time processing does not require constantly moving data in and out of the memory, which solves one of the major bottlenecks for digital architecture. As a result, by operating in the analog domain, fast (e.g., real time, substantially no latency), ultra-low power (e.g., mW to $\mu$W), and low-cost AI computing at the edge can be achieved. In addition, in-situ training allows for an edge AI system to mitigate the drift of analog hardware and variations. The in-situ learning may be needed for the practical deployment of edge analog hardware.

In a first alternative, digital-based AI computing, one could slim-down the digital microcontroller to reduce SWaP for edge AI computation. However, this first alternative would still be based on digital architecture and include additional computational burdens of analog to digital conversion and bottleneck of Von Neuron architecture. Additionally, analog operation is much more power-efficient than digital operation which relies on transistor-based operations, such as the inclusion of AND and OR gates.

In a second alternative, analog machine learning using devices can be utilized as programmable resistor or analog memory. However: 1). these resistor-based devices usually consumer more power compared with aspects of the disclosure, including MEMS CTRNN which is capacitive-based; 2) these resistor-based devices are "static" devices - that is, they do not "learn" the temporal information as with aspects of the disclosure; and 3) these resistor-based devices does not have in-situ learning capability

Analog computers use elementary physical phenomena as computational primitives and the representation of information by the relative values of analog signals. In an aspect of the disclosure, the present analog edge computing device can be a MEMS device. In this aspect of the disclosure, the MEMS device, governed by the dynamical differential equations, is the computational primitive. For example, a MEMS cantilever beam, as the computation primitive, provides the relationship between the input of voltage and the output of mechanical displacement. Both the input and the output can be continuous-time analog signals. The relationship between the input and the output, also called transfer function, can represent simple operations such as multiplication, additional or integration or more complicated operations including filtering, nonlinear functions, harmonic oscillation etc. Because of the lower power dissipation and real-time response, the MEMS device demonstrates greater than three hundred times reduction in power and greater than hundred times improvement in speed, compared to a digital workstation for solving a same artificial intelligence (AI) problem.

For example, a MEMS device used to implement a Machine Learning (ML) algorithm (e.g., continuous time autoregressive recurrent neural network CTRNN) can directly process input analog signals and may use the re-current feature of the neural network to learn temporal information. Non-limiting aspects of the re-current feature is achieved by the self-feedback "memory" enabled by, for instance, electrostatic MEMS. CTRNN is a deep learning model that accounts for irregular observations through incorporating continuous evolution of hidden states between observations. The recurrent feature is achieved by the self-feedback memory enabled by electrostatic MEMS devices. In an aspect of the disclosure, a MEMS CTRNN is constructed by connecting multiple MEMS devices to form a fully connected network. For example, the output of one MEMS device, i.e., MEMS neuron, is multiplied by a weight. Outputs of a plurality of MEMS neurons, after multiplying with the corresponding weights, are summed up to provide the input for a MEMS neuron at a different layer. In one aspect of the disclosure, different type of neurons including MEMS neurons and other analog neurons can be used in the CTRNNs. The example of analog neurons includes resistors, capacitors, operational amplifiers, programmable analog memory and other electronics circuit components.

In one aspect of the disclosure, the MEMS device (e.g., MEMS processor) is controlled by electrostatic excitation to provide a capacitive output. Analog electronics for the MEMS device can be built with an analog front end and a field programmable analog array (FPAA). The MEMS device has a tunable time constant controllable by voltage (referred to as a weight parameter). The weight parameter is set in the FPAA. The output from the MEMS device is multiplied by the weight parameters and applied to a next neuron layer (MEMS or analog).

In an aspect of the disclosure, the tunable time constant of the MEMS device enables the CTRNN to learn the salient information in the temporal sequence. The CTRNN can also be constructed by MEMS with different time constants to do the temporal learning. Learning salient information from a temporal sequence includes essentially ingesting a temporal sequence (e.g., an analog signal such as an audio signal) and extracting actionable information from the signal. The MEMS technology is well suited for learning salient information as the MEMS device is configured to extract a state or a meaning from a time series (temporal sequence). In one non-limiting example, aspects of the disclosure can be utilized for sound navigation and ranging (SONAR) underwater target detection to detect and localize objects of interest or exploration. In another non-limiting example, aspects of the disclosure can be utilized to detect anomalous signals from a machine vibration signature and use the information for predictive maintenance. In yet another non-limiting example, applying aspects of the disclosure to seismic signals can also enable the detection of seismic activity.

In an aspect of the disclosure, difference target propagation (DTP) can be used to enable the weight parameter updates at the local layer instead of the standard backpropagation algorithm where the weight parameter gradient is identified by propagating the global loss error backwards though the network. This allows the in-situ training to be done at the local layer, which greatly simplifies the analog circuit design. Using a local layer is distinct from the standard backpropagation algorithm in many ways. Machine learning neural network models may include several layers of processing where information is transformed layer-wise into an increasingly more informative space. The standard backpropagation algorithm takes output errors and pass the output errors backwards through all the layers of the network to update the parameters. The DTP approach predicts what the targets should be for each layer, and then directly calculates the error signal for each layer. The calculated layer specific error signal is then used to update the weights. Therefore, in essence, the standard backpropagation approach calculates a network level error whereas the DTP approach calculates an error for each layer of the network. As opposed to the standard backpropagation algorithm where the weight gradient is identified by propagating the global loss error backwards through the network, the DTP uses an autoencoder type of architecture to establish intermediate targets. An autoencoder is a type of neural network that is trained to copy its input to its output generally through a compressed latent representation. DTP has two main advantages: (1) The information needed at the output of each layer of the neural network can be obtained using a simple forward pass through the network, and (2) the update equations are local to each layer meaning that to update the weight of layer 'i', only local information is needed.

Another problem of particular interest is the in-situ training for the edge applications. To date, this problem has been largely unexplored by the analog computing community. The conventional stochastic gradient descent (SGD) learning approach relies on the error backpropagation through multiple layers of a neural network, which is very difficult to implement in analog hardware. In gradient descent, all data that can be accessed can be used to generate predictions for all of the accessible data using a machine learning neural network model. The error is then calculated and minimized by moving network parameters in the direction of minimizing that error. In SGD, a subset of the data is used instead. The error gradient is calculated for the subset data. The model is then updated based on the calculated error.

In SGD, the gradient can have noise associated therewith. The noise can be due to a sampling process or through the inherent noise in the analog input/output signals. The presence of noise in SGD may in fact help with convergence since the machine learning neural network model may be less likely to get stuck in a local minimum.

In an aspect of the disclosure, in-situ training is used to solve two issues that limited analog computers in the past: (1) analog hardware variation where the present technique allows the neural network to learn its parameters based on the individual edge hardware, and (2) analog hardware drift where the present technique allows the neural network (NN) to recalibrate itself through re-learning to mitigate the drift due to environmental factors such as temperature, humidity, etc.

Analog edge devices (e.g., MEMS devices or other analog devices) do vary from one to the other and their characteristics can drift over time. In-situ training enables each of the edge AI systems to learn its parameters based on the individual edge hardware. This also allows the edge AI system to recalibrate itself through re-learning, to mitigate the drift of analog hardware.

The in-situ training of the MEMS CTRNN approach provides the adaptive techniques to mitigate the effects of component differences. This kind of adaptation leads naturally to the systems that learn about their environment. The MEMS CTRNN with in-situ training can learn and provide the updated weight parameters based on the hardware component instantiated at a very fast speed (e.g., minutes of training time) and a very low energy consumption (e.g., less than one Watt-hour). The MEMS CTRNN is also more robust to component degradation and failure than are more conventional systems.

As a result, an aspect of the present disclosure is to provide MEMS CTRNN, which leverages electrostatic MEMS neurons to achieve network computation in continuous time and analog domain. A technical effect of the aspects of this disclosure allows for, or enables, in-situ training of the MEMS CTRNN approach which provides the adaptive techniques to mitigate the effects of component differences, allows or enables a more robust system to resist component degradation and failure than are more conventional systems, and allows for or enables edge computing with low power and high performance. Another aspect of the present disclosure is also to provide an in-situ supervised training of CTRNNs that allows learning directly on the edge hardware using received analog information with self-correction for the variation and drifting of the analog hardware.

A low SWaP, fast-responding edge AI can enable many applications within and outside the aviation industry. The applications can be signal filtering (adaptive), predicting, tracking, classifying, or detecting anomalies or decoding information based on continuous signal. The deployment of edge AI will grow rapidly for autonomous platforms where SWaP is desired, such as UAV, autonomous vehicles, robotics, etc.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all aspect of the disclosures described herein should be considered exemplary.

As used herein, the terms such as "first", "second", etc. may be used interchangeably to distinguish one component from another and are not intended to signify location or importance of the individual components.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

Additionally, as used herein, the terms "radial" or "radially" refer to a direction away from a common center. For example, in the overall context of a gas turbine engine, radial refers to a direction along a ray extending between a center longitudinal axis of the engine and an outer engine circumference. Furthermore, as used herein, the term "set" or a "set" of elements can be any number of elements, including only one.

Connection references (e.g., attached, coupled, secured, fastened, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

As used herein, a "controller" or "controller module" can include a component configured or adapted to provide instruction, control, operation, or any form of communication for operable components to effect the operation thereof. A controller or controller module can include any known processor, microcontroller, or logic device, including, but not limited to: field programmable gate arrays (FPGA), an application specific integrated circuit (ASIC), a full authority digital engine control (FADEC), a proportional controller (P), a proportional integral controller (PI), a proportional derivative controller (PD), a proportional integral derivative controller (PID controller), a hardware-accelerated logic controller (e.g. for encoding, decoding, transcoding, etc.), the like, or a combination thereof. Non-limiting examples of a controller or controller module can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types. In another non-limiting example, a controller or controller module can also include a data storage component accessible by the processor, including memory, whether transient, volatile or non-transient, or non-volatile memory. Additional non-limiting examples of the memory can include Random Access Memory (RAM), Read-Only Memory (ROM), flash memory, or one or more different types of portable electronic memory, such as discs, DVDs, CD-ROMs, flash drives, universal serial bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to effect a functional or operable outcome, as described herein.

Also, as used herein, while a sensor can be described as "sensing" or "measuring" a respective value, sensing or measuring can include determining a value indicative of or related to the respective value, rather than directly sensing or measuring the value itself. The sensed or measured values can further be provided to additional components. For instance, the value can be provided to a controller or processor, and the controller or processor can perform processing on the value to determine a representative value or an electrical characteristic representative of said value.

Such a controller as described herein may also compare a first value with a second value and may operate or control operations of additional components based on the satisfaction of that comparison. As used herein, the term "satisfies" or "satisfaction" of a comparison between a first value and a second value will refer to a determination of whether the first value exceeds the second value, or does not exceed the second value, or is equal to the second value, such that the comparison is "true" when satisfied. In addition, as used herein, the term "satisfies" or "satisfaction" of a comparison between a first value and a value range refers to a determination that the first value is within the value range, such that the comparison is "true" when satisfied. It will be understood that such a determination may easily be altered to be satisfied by a positive/negative comparison or a true/false comparison. Example comparisons can include comparing a sensed or measured value to a threshold value, or to a threshold value range. For example, when a sensed, measured, or provided value is compared with another value or range, including a stored or predetermined value or range, the satisfaction of that comparison can result in actions, functions, or operations controllable by the controller.

Additionally, as used herein, elements being "electrically connected," "electrically coupled," or "in signal communication" can include an electric transmission or signal being sent, received, or communicated to or from such connected or coupled elements. Furthermore, such electrical connections or couplings can include a wired or wireless connection, or a combination thereof.

As used here, "reduction", "reduce", "reducing", or the like, can refer to a relative value being less than or lower than an initial value it is compared with. With respect to signal "noise," this reduction may be quantifiable based on typical electrical noise measurement techniques, including, but not limited to, measuring the root mean square (RMS) value of the "noise" using voltmeter, measuring the noise power spectrum across different frequencies using spectrum analyzers, noise figure measurement by measuring the degradation of signal-to-noise ratio (SNR) as the signal passes through a device, a combination thereof, or the like.

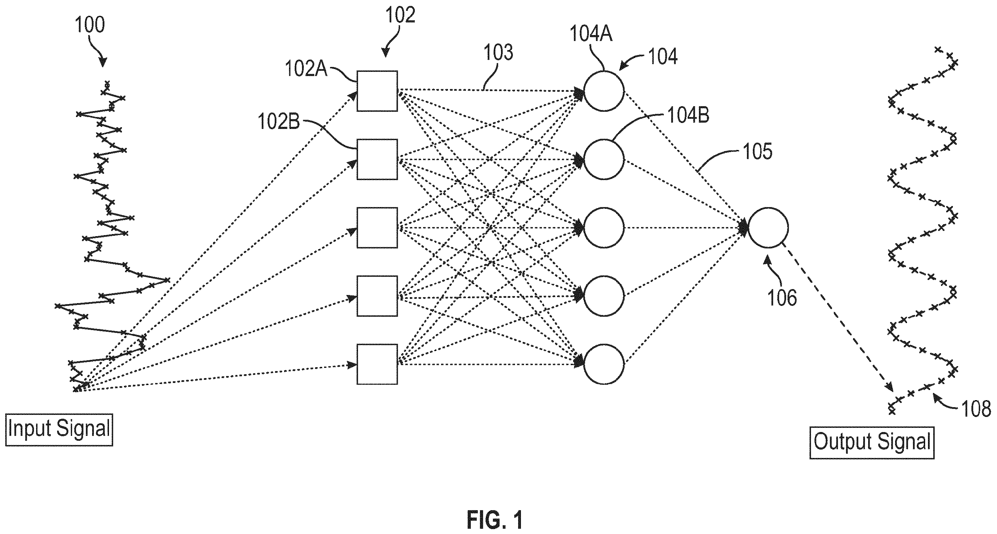

Referring now to the drawings, FIG. 1 is a network architecture of a plurality of analog edge devices (e.g., MEMS devices) in a neural network used for reducing noise in an input analog signal or denoising an input analog signal, according to an aspect of the present disclosure. In an aspect of the disclosure, the input analog signal can be an audio signal such as, for example, speech. The neural network can be used, for example, for speech recognition (e.g., speech direction recognition). The input analog signal can also be a noisy signal, and the neural network can be used as an adaptive filter to operably reduce or substantially to remove noise in the noisy signal. The term substantially is used herein to mean to remove at least 50% noise (for example, remove at least 90%) in most applications. The neural network can also be used to recognize the type of one (or a set of simultaneous) input analog signal and to determine a direction (such as a relative direction or heading) of a source of the input analog signal. The input analog signal can also be, for example, a vibration signal (e.g., earth vibration) and the neural network can be used to recognize if the vibration signal is an earthquake or other type of vibration and determine a location or a direction of the source of the vibration. The input analog signal can be an image signal, and the neural network can be used for image recognition. A plethora of applications can be implemented in the analog domain using the present neural network.

FIG. 1 shows an input signal 100 that is fed into a first plurality of analog edge devices 102 (e.g., a plurality of MEMS devices). The input signal 100 is, for example, an input analog signal that has signal noise (e.g., a noisy audio signal). Each of the first plurality of analog edge devices 102 can be excited by the input signal 100 to convert the input signal 100 into mechanical motion. The mechanical motion in each of the first plurality of analog edge devices 102 is converted into a first output electrical signal to obtain a first plurality of output analog signals (shown collectively as 103). Each of the first plurality of analog signals 103 of each of the first plurality of analog edge devices 102 is input to an analog edge device in a second plurality of analog edge devices 104. In this aspect of the disclosure, the first plurality of analog edge devices 102 (e.g., MEMS devices computational neurons) are the MEMS CTRNN neurons. In FIG. 1, the squares represent the first plurality of analog edge devices 102 (e.g., MEMS devices) and the circles represent the second plurality of analog edge devices 104 (e.g., analog neurons implemented by FPAA). In other aspects of the disclosure, both the first plurality of analog edge devices 102 (for example, MEMS devices neurons) and the second plurality of analog edge devices 104 (for example, analog neurons implemented by FPAA) can be placed in the same layer of the neural network. In another aspect of the disclosure, the first plurality of analog edge devices 102 (e.g., MEMS devices neurons) in the first layer can replace the second plurality of analog edge devices 104 (e.g., analog neurons) in the second layer. Examples of analog neurons include resistors, capacitors, operational amplifiers, programmable analog memory and other electronics circuit components.

For example, a plurality of logical signals from a first analog edge device 102A (e.g., MEMS device) in the first plurality of analog edge devices 102 (e.g., MEMS device neurons) is input into the second plurality of analog edge devices 104 (e.g., analog neurons) and a plurality of logical signals from a second analog edge device 102B is input into the second plurality of analog edge devices 104 (e.g., analog neurons). Each analog edge device in the first plurality of analog edge devices 102 outputs a respective output analog signal 103 that is multiplied by a respective weight parameter to obtain a plurality of weighted signals. For example, a first analog signal output 103 by a first analog edge device 102A in the first plurality of analog edge devices 102 is multiplied by a first weight parameter to obtain a first weighted signal, and a second analog signal output 103 by a second analog edge device 102B in the first plurality of analog edge devices 102 is multiplied by a second weight parameter to obtain a second weighted signal. The plurality of weighted signals 103 are input to an analog edge device in the second plurality of analog edge devices 104. For example, the first weighted signal and the second weighted signal are input to the first analog edge device 104A in the second plurality of analog edge devices 104. The first plurality of analog edge devices 102 are in a first layer and the second plurality of analog edge devices 104 are in a second layer.

Each analog edge device in the second plurality of analog edge devices 104 outputs an output analog signal 105 that is multiplied by a weight parameter to obtain a plurality of weighted signals (shown collectively as 105). For example, a first analog signal output 105 by a first analog edge device 104A in the second plurality of analog edge devices 104 is multiplied by a first weight parameter to obtain a first weighted signal, and a second analog signal 105 output by a second analog edge device 104B in the second plurality of analog edge devices 104 is multiplied by a second weight parameter to obtain a second weighted signal. The plurality of weighted signals are input to an analog edge device 106 (e.g., a MEMS neuron). The analog edge device 106 is within a third layer of the network. For example, the first weighted signal and the second weighted signal are input to the analog edge device 106 (e.g., MEMS device neuron). The second plurality of analog edge devices 104 and the analog edge device 106 (e.g., MEMS device neuron) can be implemented as an analog array. The second plurality of analog edge devices 104 are in the second layer and the analog edge device 106 (e.g., MEMS neuron) is in a subsequent third layer. Although three layers are shown in FIG. 1, the number of layers is not limited to two or three layers. There may be a plurality of layers (two or more layers) wherein this process can be repeated a plurality of times. The analog edge device 106 outputs an output signal 108. The output signal 108 corresponds to the input signal 100 that is operably corrected or operably filtered to substantially remove the signal noise in the input signal 100. The neural network corresponding to the second plurality of analog edge devices 104 (neurons) and the analog edge device 106 (neuron) is trained to find the appropriate weight parameters to multiply the various signals to output the output signal 108 that is substantially or operably free from noise, or reduced in noise compared with the input signal 100.

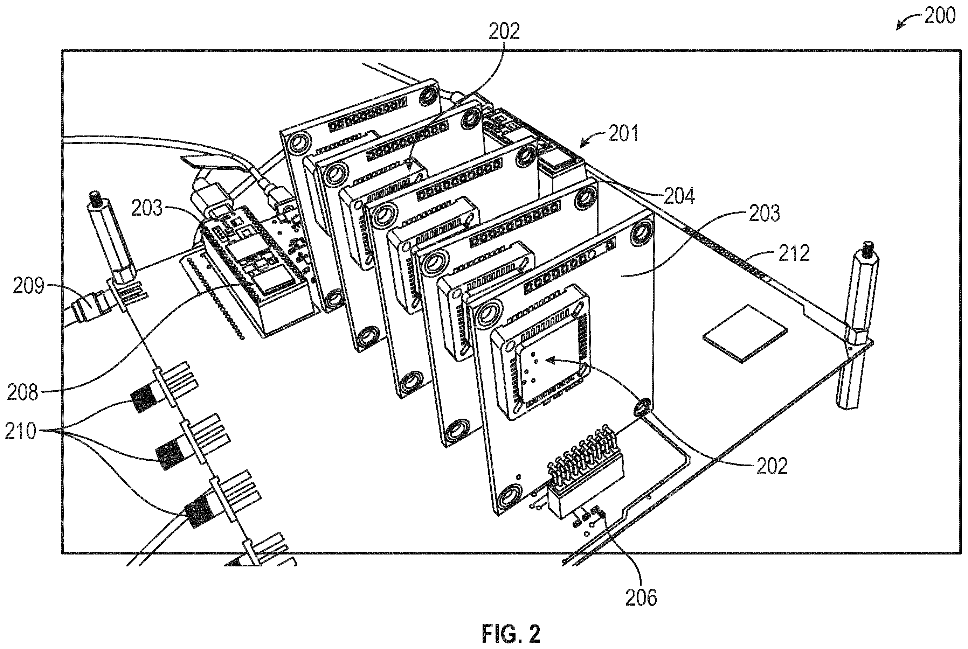

FIG. 2 is an electronic circuit 200, the electronic circuit showing the interconnection between a plurality of analog edge device (e.g., MEMS) for implementing an analog system for edge artificial intelligence using a neural network 201 and one or more field programmable analog arrays (FPAAs), according to an aspect of the present disclosure. As shown in FIG. 2, the electronic circuit 200 includes a plurality of MEMS devices 202 (MEMS neurons). In an aspect of the disclosure, the plurality of MEMS devices 202 (MEMS neurons) can convert electrical analog inputs into a mechanical signal within the plurality of MEMS devices 202, which, in turn, output electrical signals through an analog front-end circuitry. In non-limiting aspects of the disclosure, each of the plurality of MEMS devices 202 can be electrically connected to a corresponding electronic board in a plurality of electronic boards 204. The electronic circuit 200 also includes a main electronic board 206 (e.g., a printed circuit board PCB) for electrically connecting the plurality of electronic boards 204. The electronic circuit 200 also includes one or more memory devices 208 (e.g., one or more field programmable analog arrays (FPAAs)). The one or more memory devices 208 are also electrically connected to the main electronic board 206. The one or more memory devices 208 communicate with the plurality of MEMS devices 202 via the main electronic board 206. In an aspect of the disclosure, as shown in FIG. 2, the one or more memory devices 208 in the electronic circuit 200 are one or more FPAAs. Although one or more FPAAs used in the electronic circuit 200 can be used as the at least one memory device 208, or the one or more memory devices 208, one or more ferro-electric memory devices, or one or more resistive memory devices, or one or more programmable analog memory devices, etc., can also be used as the one or more memory devices 208. The one or more memory devices 208 are in communication with the plurality of MEMS devices 202. The one or more memory devices 208 are used to store weight parameters discussed above. The electronic circuit 200 is powered through a power supply line 209. The electronic circuit 200 includes a plurality of input ports 210 connected to the main electronic board 206. Input analog signals are input through the plurality of input ports 210 and transmitted through the main electronic board 206 to the plurality of MEMS devices 202 (MEMS neurons). Output signals from the plurality of MEMS devices 202 are multiplied by weight parameters stored in the one or more memory devices 208 to implement the neural network, as shown in FIG. 1.

The electronic circuit 200 also includes an output port 212 connected to the main electronic board 206. An output signal from the neural network of the plurality of MEMS devices 202 is output through the output port 212. In an aspect of the disclosure, the neural network 201 can be, for example, a CTRNN. In the electronic circuit 200 used for implementing the neural network, the plurality of neurons in the neural network 201 is implemented using the plurality of MEMS devices 202 (MEMS neurons or MEMS CTRNN). For example, referring to FIG. 1, the input signal 100 (for example, a "noisy" audio signal, as explained with reference to FIG. 1) is input through one or more of the input ports 210 and the output signal (such as the corrected or filtered output signal 108 of FIG. 1) is output through the output port 212. The weight parameters used for multiplying with various signals output by the first plurality of analog edge devices 102 (e.g., MEMS device neurons) and the second plurality of analog edge devices 104 (e.g., analog neurons) are stored in the plurality of memory devices 208 (e.g., FPAAs). For example, by using a plurality of input ports 210 instead of a single input port, directionality of an input analog signal (e.g., an audio signal) can be determined by processing (e.g., comparing) the input analog signal using the neural network 201 (e.g., CTRNN).

The neural network 201 (e.g., CTRNN) can use multi-layer hierarchical MEMS devices 202 (MEMS neurons) and analog electronics. In one aspect of the disclosure, the plurality of MEMS devices 202 (MEMS neurons) can have electrostatic excitation and capacitive output. Analog electronics 203 can be built with an analog front end including the plurality of MEMS devices 202 and the plurality of memory devices 208 (e.g., FPAA). The plurality of MEMS devices 202 (MEMS neurons) has a tunable time constant controllable by voltage. The weight parameter is set in the plurality of memory devices 208 (e.g., the FPAA). The output from the plurality of MEMS devices 202 (MEMS neurons) is multiplied by the weight parameters and applied to the next layer neuron (MEMS device or analog edge device), as described above with respect to FIG. 1.

The tunable time constant of the MEMS device enables the neural network 201 (e.g., CTRNN) to learn the salient information in the temporal sequence. In an aspect of the disclosure, the CTRNN can also be constructed by a MEMS device with different time constants to do the temporal learning. In one non-limiting example, seismic activities can generate different types of seismic waves which travel at different speeds through the Earth. Primary waves ("P-waves") are fastest and are the first signal to arrive, followed by the slower secondary waves ("S-waves"), then by the surface waves. Non-limiting aspects of the disclosure can be included wherein the MEMS neurons of an edge AI computer can adjust its time constants based on the different seismic waves the respective MEMS neuron is monitoring, as described herein.

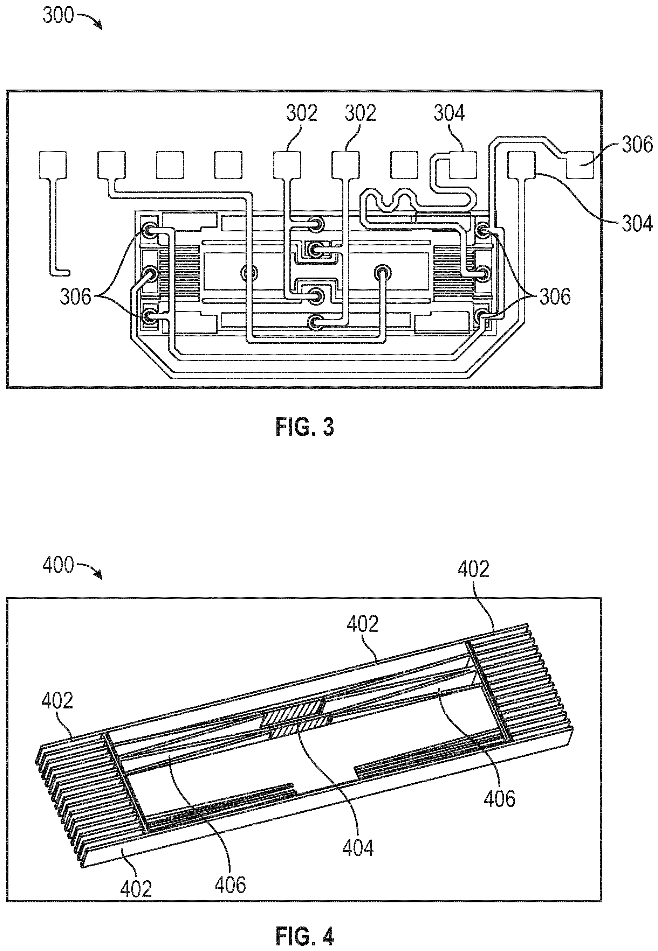

FIG. 3 is a schematic diagram of an example MEMS device (MEMS neuron) 300, according to an aspect of the present disclosure. The MEMS device 300 is an electromechanical device that can be controlled with electrical input signals by applying voltages to various input ports of the MEMS device 300. For example, the MEMS device has excitations ports 302, detection ports 304, and tuning ports 306. Referring back to FIG. 1, the input signal 100 is input through the excitation ports 302 and the output analog signal 103 is output through the detection ports 304. The output analog signal 103 is multiplied by the corresponding weight parameter and summed with the output signals from other analog edge devices in the first plurality of analog edge devices, etc., multiplied by the corresponding weight parameters. The sum of these weighted output signals is fed into the inputs of the next neurons, for example 104. A feature of the MEMS neuron is the tunable time constant which are the various tuning voltages input through the tuning ports of 306. The various weight parameters and the various tuning voltage parameters are stored, for example, in the plurality of memory devices 208 (e.g., FPAAs shown in FIG. 2). The multiplication, summation, and the nonlinear activation functions such as sign mod, hyperbolic tangent, ReLU (Rectified Linear Unit), for example, is implemented in the plurality of memory devices 208 (e.g., FPAAs). Other aspects of the disclosure of these functions can be analog units such resistors, capacitor, operational amplifiers, etc.

FIG. 4 is a schematic diagram of a MEMS device 400 used as a neuron to implement the neural network, according to an aspect of the present disclosure. The MEMS device 400 includes a frame 402, one or more anchors 404, and a plurality of springs 406. The one or more anchors 404 secure the plurality of springs 406 to the frame. By applying a voltage through the input signal, an electrostatic force is applied to the plurality of springs 406. As a result, the plurality of springs 406 move, which changes the capacitance of the MEMS device 400 and, thus, ultimately the output voltage or the output current of the output signal. In addition, the frame 402 can be moved by applying a voltage. Input signal 100 is applied through the excitation port 302, which causes the frame 402 to move. In this aspect of the disclosure, the movement of frame 402 is detected through the detection port 304 through the capacitance change. Ultimately, the amplifier in the analog front end or interface circuit turns the capacitance change into the output voltage or the output current of the output signal.

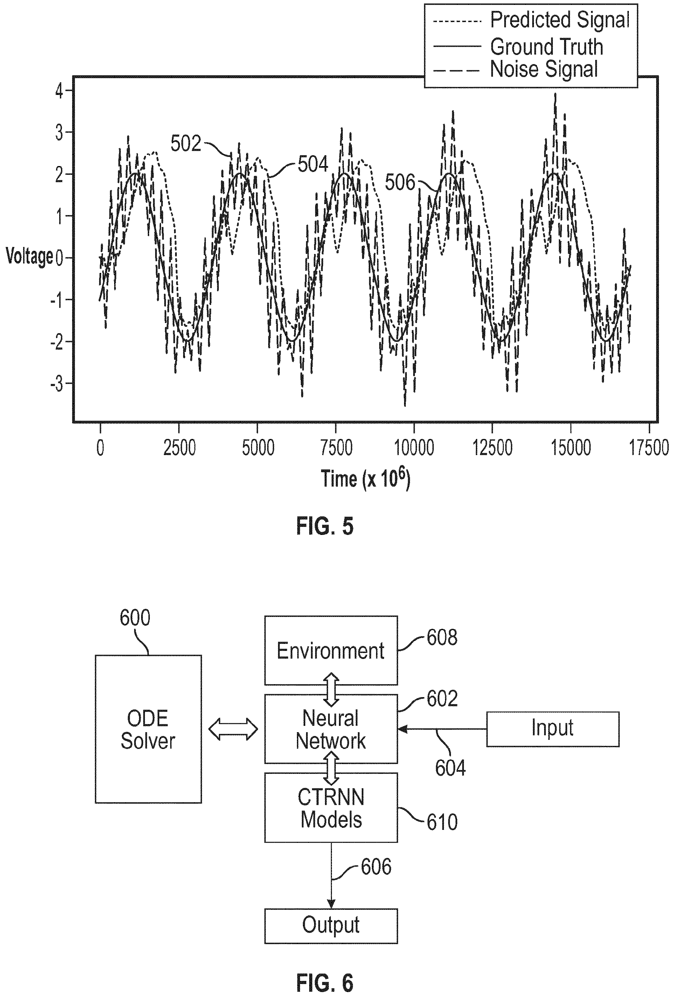

FIG. 5 is a plot depicting a noisy input analog signal, a denoised output analog signal, and a comparison ground truth analog signal, according to an aspect of the present disclosure. The X-axis represents time. The Y-axis represent the voltage. The plot shown in FIG. 5 is an exemplary plot wherein the input analog signal 502, such as input signal 100, that is noisy includes a high frequency varying component on top of a low frequency varying component. The output analog signal 504 is a smoothed signal where the high frequency noise component is substantially reduced in amplitude. The term "substantially" is used herein to mean that the high frequency component simulating the noise is reduced by at least 50% (for example, reduced by at least 90%). The input analog signal 502 corresponds to the input signal (e.g., input signal 100) fed into the neural network. One objective is for the neural network training to learn thorough the comparison of the output analog signal 504 (denoised analog signal) with the ground truth analog signal 506 to determine best weight parameters which minimize the error between the output analog signal 504 (denoised analog signal) and the ground truth analog signal 506. In one non-limiting example aspect of the disclosure, the comparison of the output analog signal 504 with the ground truth signal 506 can operably modify the weight parameters for successive multiplying or weighting of the analog signals by the modified weight parameters, wherein the modifying of the weight parameters reduces and error between the output analog signal 504 (denoised analog signal) and the ground truth analog signal 506. An objective for the neural network inference is to process the input analog signal 502 through the network with the learned weight parameters so that the output analog signal 504 (denoised analog signal) is significantly lower in noise.

The denoising the input analog signal is performed using a neural network wherein a plurality of MEMS neurons (MEMS devices) are used.

The MEMS device (neuron) can be modeled using the following mathematical equation (1):

$$\ddot{Z} + 2\zeta\omega_0\dot{Z} + \omega_0^2 Z = \frac{2}{m}\frac{\varepsilon A}{d^2}V_b V_i + \frac{\varepsilon A_t}{md^3}V_m^2 Z \qquad (1)$$

where the term Z corresponds to the displacement that is converted to current and/or voltage associated with the output analog signal of the MEMS device, the term $V_i$ corresponds to the input signal, $w_o$ corresponds to the natural frequency of the MEMS device, $\zeta$ is the damping ratio, and $V_m$ is the voltage applied to adjust the weight parameter, d is the electrode gap, $V_b$ is the bias voltage, m is the mass, A is the exchange electrode gap and $\varepsilon$ is the vacuum permittivity.

By ignoring the second order term $\ddot{Z}$, equation (1) can be approximated as equation (2):

$$\dot{Z} = -\frac{Z}{2\zeta\omega_0}\left(\omega_0^2 - \frac{\varepsilon A_t}{md^3}V_m^2\right) + \frac{1}{2\zeta\omega_0}\frac{2}{m}\frac{\varepsilon A}{d^2}V_b V_i \qquad (2)$$

and a time delay t is determined by equation (3):

$$\tau = \frac{2\zeta\omega_0}{\left(\omega_0^2 - \dfrac{\varepsilon A_t}{md^3}V_m^2\right)} \qquad (3)$$

Equation (3) shows that the time delay t depends, among other parameters, on the voltage $V_m$. As a result, by adjusting the voltage $V_m$ applied to adjust the weight parameter, the time delay or time constant t can be adjusted. The MEMS device has an initial set time constant that is determined by the design, the geometry, and other physical parameters of the components of the MEMS device. The initial set time constant can also vary with temperature, or generally, the environmental conditions of the MEMS device, such as temperature, humidity, etc. In order to provide more control on the time constant of the MEMS device, the time constant of the MEMS device can be adjusted or varied by applying a voltage or a current to the MEMS device. The voltage $V_m$ is used to adjust the time constant. The MEMS device solves equation (1) or equation (2) naturally by using an input signal (voltage or current to control displacement), control parameters (e.g., voltage or current to control time) to provide an output signal (voltage and/or current).

In an aspect of the disclosure, CTRNN using MEMS devices can directly process the input analog signal and can use the re-current feature of the neural network to learn temporal information. The recurrent feature is achieved by the self-feedback memory enabled by electrostatic MEMS devices.

FIG. 6 is a flow diagram of a machine learning algorithm (e.g., CTRNN) using a neural network for solving ordinary differential equations, according to an aspect of the present disclosure. FIG. 6 illustrates an ordinary differential equation solver (ODE) 600 implemented using a neural network 602 of analog edge devices (e.g., MEMS devices). The neural network 602 can implement a CTRNN model 610. The neural network 602 receives an analog signal input 604 and outputs an analog signal output 606. The time constant parameter of the analog edge devices (e.g., MEMS devices) is controlled based on the environment 608 of the analog edge devices, as described above.

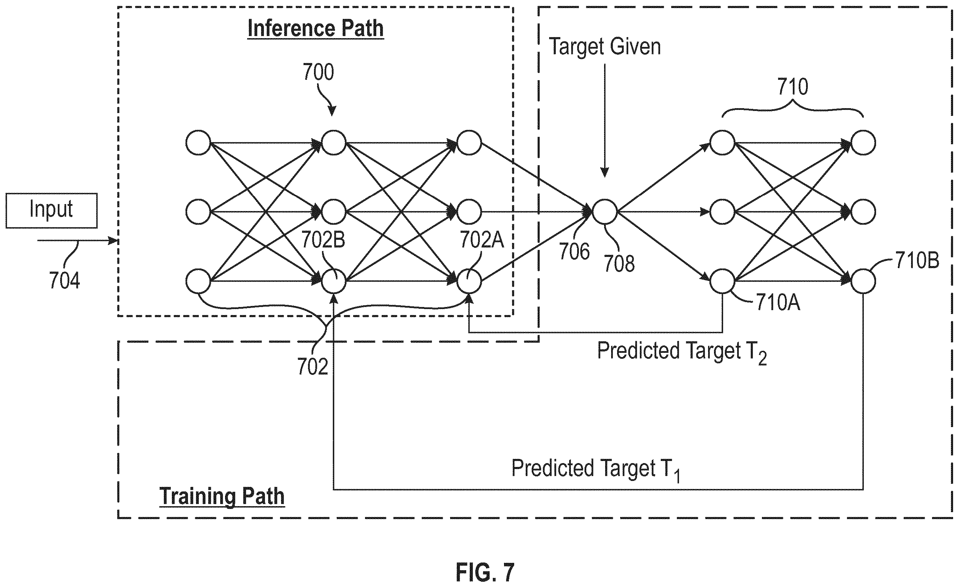

FIG. 7 is a schematic diagram showing an example implementation of a multi-layer hierarchical difference target propagation for MEMS CTRNN in-situ training, according to an aspect of the present disclosure. As shown in FIG. 7, a neural network 700 having neuron layers 702 of analog edge devices (e.g., MEMS devices) is configured to receive one or more input analog signals 704, such as input signal 100. In an aspect of the disclosure, the neural network 700 is a CTRNN that is trained in-situ using the one or more input analog signals 704 to provide an output analog signal 706 to an analog edge device 708 (e.g., a MEMS neuron). The use of in-situ training can solve two issues that limited analog computer in the past: (i) analog hardware variation and (ii) analog hardware drift. The neural network (e.g., CTRNN) can learn its parameters based on individual edge hardware. The neural network (e.g., CTRNN) neural network can recalibrate itself through re-learning to mitigate drift due to environmental factors (e.g., to correct for the effects of the environment to change the time constant), as shown in FIG. 6.

The inference path can include neural network 700 having neuron layers 702. In general, the inference path uses weight parameters including the time constant parameters that are set in the CTRNN. In the present case, however, the CTRNN is also trained in-situ using the one or more input analog signals 704. As a result, difference target propagation (DTP) is used to allow updates of the weight parameter at the local layer instead of the standard backpropagation algorithm where the weight gradient is identified by propagating the global loss error backwards though the network. This allows the in-situ training to be done at the local layer, which greatly simplifies the analog circuit design. For example, a first layer 710A in the neuron layers 710 that provides a prediction on time constant T2 can be backpropagated locally to the last layer 702A in the neuron layers 702. Similarly, a second layer 710B in the neuron layers 710 that provides a prediction on time constant T1 can be backpropagated locally to the layer 702B in the neuron layers 702. This feature is called difference target propagation (DTP) and is used to allow the weight updates at the local layer.

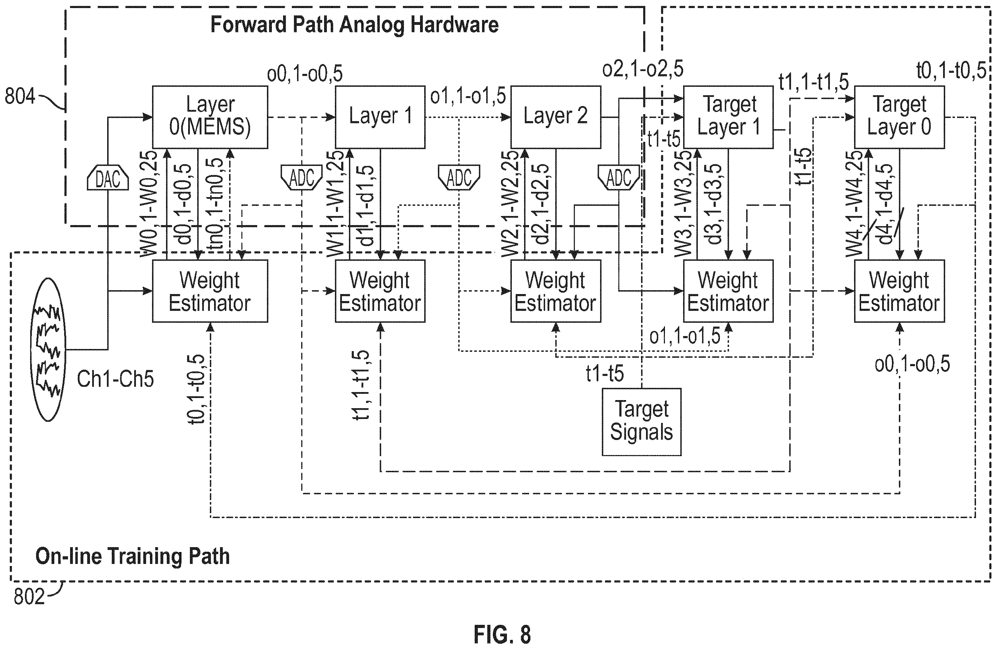

FIG. 8 is a flow diagram showing details of a difference target propagation scheme used by the CTRNN, according to an aspect of the present disclosure. As shown in FIG. 8, the continuous time autoregressive recurrent neural network uses a training path 802 and a forward path or inference path 804. The forward inference path 804 corresponds to the neuron layers 702, shown in FIG. 7, and the training path 802 corresponds to the neuron layers 710, shown in FIG. 7. The training path 802 has a plurality of neuron target layers (layer 0 and layer 1) and the forward path 804 has a plurality of neuron layers (layer 0, layer 1, and layer 2). Each neuron layer is controlled by inputting a weight using a weight estimator. The weight is updated in real-time and in-situ at the local layer (layer 0, layer 1, layer 2, etc.) instead of the standard backpropagation algorithm where the weight gradient is identified by propagating the global loss error backwards though the neural network (e.g., CTRNN). This allows the in-situ training to be done at the local layer, which greatly simplifies the analog circuit design.

FIG. 8 describes one non-limiting example of aspects of the disclosure, such as the difference target propagation (DTP) technique. The DTP method allows the target of every neuron in the network to be computed, or produced, and used to estimate the weights using a weight estimator that is local to each neuron. This is done by building additional neural network (NN) layers called the target layers which are arranged as the "mirror image" of the inferencing NN, as shown inside the "dashed box" 802 of FIG. 8. The inference path and the Nth-layer Target signals are used to produce the targets for the N-1th layer, which are in turn used to produce the targets for the N-2th layer, and so forth. On each layer of the network, each weight estimator belonging to a neuron receives a target signal and then subtracts it from the output of the neuron. The result of the subtraction is then multiplied with one of the inputs and then integrated, and that produces the value of the weight needed to be applied to that given input.

In an aspect of the disclosure, the weight parameters can be updated using difference target propagation in the CTRNN. The CTRNN uses an autoencoder type of architecture to establish intermediate targets. The weight update is based on local layer information so as to provide in-situ training to mitigate temporal drift in the plurality of analog edge devices of the CTRNN.

A MEMS analog edge device is provided that can perform edge artificial intelligence (AI) computing at relatively lower power and relatively higher speed (for example, greater than hundreds of times lower in power and greater than hundreds of times faster in speed) when compared with existing digital computing architectures. The term "edge" is used herein throughout to mean a computing device at an edge or an end of a network architecture near the user, such as a cellphone, a sensor, or other network connected devices, etc. Analog computing is especially powerful for edge AI applications where size, weight, and power (SWaP) plays an important role. In addition, analog computing is especially powerful for edge AI applications where most of the data collected is produced by analog edge devices (e.g., analog sensors). By performing AI computing in the analog domain, the need for two-way analog-to-digital conversion (ADC) and digital-to-analog conversion (DAC) can be eliminated. In addition, analog continuous-time processing does not require constantly moving data in and out of the memory, which solves one of the major bottlenecks for digital architecture. As a result, by operating in the analog domain, fast (e.g., real-time, substantially no latency), ultra-low power (e.g., mW to $\mu$W), and low-cost AI computing at the edge can be achieved. In addition, in-situ training allows for an edge AI system to mitigate the drift of analog hardware and variations. The in-situ learning may be needed for the practical deployment of edge analog hardware.

The analog system described herein can be configured to perform AI computing using natural physical phenomena as computation primitives, without analog to digital conversion. The analog system can be configured to perform AI computing at least two orders of magnitude faster in speed and at least two orders of magnitude lower in energy consumption when compared with the conventional digital technology.

In an aspect of the disclosure, the present analog edge computing device can be a MEMS device. The MEMS device demonstrates greater than three hundred times reduction in power and greater than hundred times improvement in speed compared to a digital workstation solving the same AI problem.

For example, a MEMS device used to implement a Machine Learning (ML) algorithm (e.g., a CTRNN) can directly process input analog signals and may use the re-current feature of the neural network to learn temporal information. CTRNN is a deep learning model that accounts for irregular observations through incorporating continuous evolution of hidden states between observations. The recurrent feature is achieved by the self-feedback memory enabled by electrostatic MEMS devices.

In one aspect of the disclosure, the MEMS device (e.g., a MEMS processor) is controlled by electrostatic excitation to provide a capacitive output. Analog electronics for the MEMS device can be built with an analog front end and a field programmable analog array (FPAA). The MEMS device has tunable time constant controllable by voltage. The weight is set in the FPAA. The output from the MEMS device is multiplied by the weight parameters and applied to a next neuron layer (MEMS or analog).

In an aspect of the disclosure, the tunable time constant of the MEMS device enables the MEMS-CTRNN to learn the salient information in the temporal sequence. The CTRNN can also be constructed by a MEMS device with different time constants to do the temporal learning.

In an aspect of the disclosure, difference target propagation (DPT) can be used to enable the weight updates at the local layer instead of the standard backpropagation algorithm where the weight gradient is identified by propagating the global loss error backwards though the network. This allows the in-situ training to be done at the local layer, which greatly simplifies the analog circuit design.

In an aspect of the disclosure, the use in-situ training to solve two issues that limited analog computer in the past: (1) analog hardware variation where the present technique allows the neural network to learn its parameters based on the individual edge hardware, and (2) analog hardware drift where the present technique allows the neural network to recalibrate itself through re-learning to mitigate the drift due to environment.

Another problem of particular interest is the in-situ training for the edge applications. To date this problem has been largely unexplored by the analog computing community. The conventional stochastic gradient descent (SGD) learning approach relies on the error backpropagation through multiple layers of neural network, which is very difficult to implement in analog hardware. Analog edge devices do vary from one to the other and their characteristics can drift over time. In-situ training enables each of the edge AI system to learn its parameters based on the individual edge hardware. This also allows the edge AI system to recalibrate itself through re-learning to mitigate the drift of analog hardware.

By performing AI computing in the analog domain, the need for two-way analog-to-digital conversion can be eliminated. Analog, continuous-time processing does not require constantly moving data in and out of the memory, which solves one of the major bottlenecks for digital architecture. This enables fast (real time, no latency), ultra-low power (mW to μW) and low-cost AI computing at the edge. Analog computing is especially powerful for the edge AI applications where lower size, weight and power (SWaP) is needed and most of the data collected is produced by analog sensors.

As a result, an aspect of the present disclosure provides a MEMS Continuous-Time Recurrent Neural Network (CTRNN) that leverages electrostatic MEMS neurons to achieve network computation in continuous time and analog domain. Another aspect of the present disclosure is to provide an in-situ supervised training of CTRNNs that allows learning directly on the edge hardware using received analog information with self-correction for the variation and drifting of the analog hardware.

A low SWaP, fast-responding edge AI that can have many applications within and outside the aviation industry is enabled. The applications can be signal filtering (adaptive), predicting, tracking, classifying or detecting anomalies, or decoding information based on a continuous signal. The edge AI can be deployed in autonomous platforms where SWaP is desired such as UAV, autonomous vehicles, robotics, etc.

Further aspects are provided by the subject matter of the following clauses.

An analog system for edge artificial intelligence (AI) computing, the analog system including an input port configured to receive an input analog signal, a first plurality of analog edge devices connected to the input port and configured to receive the input analog signal and to output a first plurality of output analog signals, a second plurality of analog edge devices in communication with the first plurality of analog edge devices, the second plurality of analog edge devices configured to receive the first plurality of output analog signals from the first plurality of analog edge devices and to output a second plurality of output analog signals, at least one memory device in communication with the first plurality of analog edge devices and the second plurality of analog edge devices, the at least one memory device configured to store weight parameters, the weight parameters being adjustable based on at least one of: pre-determined values from off-line training, or based on real-time updates through in-situ training, and an output port configured to output an output analog signal, wherein the second plurality of output analog signals are multiplied by the weight parameters to obtain a plurality of weighted analog signals, and the plurality of weighted analog signals are output through the output port as the output analog signal.

The analog system of any preceding clause, wherein the at least one memory device comprises one or more field programmable analog arrays (FPAAs) or one or more programmable analog memories.

The analog system of any preceding clause, wherein the first plurality of analog edge devices and the second plurality of analog edge devices are trained to find the weight parameters to operably reduce signal noise of the output analog signal.

The analog system of any preceding clause, further including a plurality of electronic boards, each of the first plurality of analog edge devices and the second plurality of analog edge devices being connected to a corresponding electronic board in the plurality of electronic boards, and a main electronic board, wherein the plurality of electronic boards and the at least one memory device are electrically connected to the main electronic board.

The analog system of any preceding clause, wherein the input analog signal has signal noise and the output analog signal corresponds to the input analog signal with the signal noise substantially reduced.

The analog system of any preceding clause, wherein the input analog signal is an audio signal.

The analog system of any preceding clause, wherein the analog system is configured to perform AI computing using natural physical phenomena as computation primitives, without analog to digital conversion, and wherein the analog system is configured to perform AI computing at least two orders of magnitude faster in speed and at least two orders of magnitude lower in energy consumption when compared with the conventional digital technology.

The analog system of any preceding clause, wherein the first plurality of analog edge devices or the second plurality of analog edge devices, or both, comprise a plurality of micro-electro-mechanical systems (MEMS) devices.

The analog system of any preceding clause, wherein the plurality of MEMS are configured to convert the input analog signal into a mechanical signal and to convert the mechanical signal into an output analog signal, wherein each of the plurality of MEMS has a tunable time constant controllable by voltage.

The analog system of any preceding clause, wherein the first plurality of analog edge devices, the second plurality of analog edge devices, and the memory devices are part of a neural network, wherein each of the first plurality of analog edge devices and each of the second plurality of analog edge devices is a neuron in the neural network.

The analog system of any preceding clause, wherein the neural network is a continuous time recurring neural network (CTRNN).

The analog system of any preceding clause, wherein the first plurality of analog edge devices and the second plurality of analog edge devices of the CTRNN have different time constants to perform temporal learning and to adjust a time constant of the different time constants.

The analog system of the preceding clause, wherein the weight parameters are updated using difference target propagation in the CTRNN that uses an autoencoder type of architecture to establish intermediate targets, and wherein the weight parameters are updated based on local layer information so as to provide in-situ training of the CTRNN to mitigate temporal drift in the first plurality of analog edge devices and the second plurality of analog edge devices of the CTRNN.

The analog system of any preceding clause, wherein the in-situ training of the CTRNN allows the CTRNN to learn its parameters based on individual analog edge device.

The analog system of any preceding clause, wherein the in-situ training of the CTRNN allows the CTRNN to recalibrate itself through re-learning to mitigate analog hardware drift due to environmental factors.

The analog system of any preceding clause, wherein the analog drift due to the environmental factors includes changes to a time constant due to the environmental factors.

A method of processing an analog signal, the method including receiving an input analog signal at an input port, receiving, by a first plurality of analog edge devices connected to the input port, the input analog signal, outputting, by the first plurality of analog edge devices, a first plurality of output analog signals, receiving, by a second plurality of analog edge devices from the first plurality of analog edge devices, the first plurality of output analog signals, outputting, by the second plurality of analog edge devices, a second plurality of output analog signals, multiplying the second plurality of output analog signals by weight parameters stored on at least one memory device in communication with the first plurality of analog edge devices and the second plurality of edges devices, to obtain a plurality of weighted analog signals, the weight parameters being adjustable based on at least one of: pre-determined values from off-line training, or based on real-time updates through in-situ training, outputting the plurality of weighted analog signals as an output analog signal through an output port, and comparing the output analog signal with a ground truth analog signal to modify the weight parameters for successive multiplying, wherein the modified weight parameters reduce an error between the output analog signal and the ground truth analog signal.

The method of any preceding clause, wherein the input analog signal has signal noise and the output analog signal corresponds to the input analog signal with the signal noise substantially reduced.

The method of any preceding clause, further comprising applying a voltage to control a time constant of the first plurality of analog edge devices or the second plurality of analog edge devices, or both.

The method of any preceding clause, further comprising updating the weight parameters using difference target propagation in a continuous time recurring neural network (CTRNN) including the first plurality of analog edge devices, the second plurality of analog edge devices, and the memory devices, and identifying the weight parameters using local layer information based on difference target propagation so as to provide in-situ training to mitigate a temporal drift in the first plurality of analog edge devices and the second plurality of analog edge devices of the CTRNN.

An analog system for edge artificial intelligence (AI) computing, the analog system comprising: an input port configured to receive an input analog signal; a first plurality of analog edge devices connected to the input port and configured to receive the input analog signal and to output a first plurality of output analog signals; a second plurality of analog edge devices in communication with the first plurality of analog edge devices, the second plurality of analog edge devices configured to receive the first plurality of output analog signals from the first plurality of analog edge devices and to output a second plurality of output analog signals; one or more memory devices in communication with the first plurality of analog edge devices and the second plurality of analog edge devices, the one or more memory devices configured to store weight parameters, the weight parameters being adjustable based on pre-determined values from off-line training or based on real-time updates through in-situ training; and an output port configured to output an output analog signal, wherein the second plurality of output analog signals are multiplied by the weight parameters to obtain a plurality of weighted analog signals, and the plurality of weighted analog signals are output through the output port as the output analog signal.

The analog system according to any preceding claim, wherein the one or more memory devices comprise one or more field programmable analog arrays (FPAAs) or one or more programmable analog memories.

The analog system according to any preceding claim, wherein the first plurality of analog edge devices and the second plurality of analog devices are trained to find the weight parameters so as to output the output signal that is substantially free from signal noise.

The analog system according to any preceding claim, further comprising: a plurality of electronic boards, each of the first plurality of analog edge devices and the second plurality of analog edge devices being connected to a corresponding electronic board in the plurality of electronic boards; and a main electronic board, wherein the plurality of electronic boards and the one or more memory devices are electrically connected to the main electronic board.

The analog system according to any preceding claim, wherein the input analog signal has signal noise and the output analog signal corresponds to the input analog signal with the signal noise substantially reduced.

The analog system according to any preceding claim, wherein the input analog signal is an audio signal.

The analog system according to any preceding claim, wherein the analog system is configured to perform AI computing using natural physical phenomena as computation primitives, without analog to digital conversion, and wherein the analog system is configured to perform AI computing at least two orders of magnitude faster in speed and at least two orders of magnitude lower in energy consumption when compared with the conventional digital technology.

The analog system according to any preceding claim, wherein the first plurality of analog edge devices or the second plurality of analog edge devices, or both, comprise one or more micro-electro-mechanical systems (MEMS) devices.

The analog system according to any preceding claim, wherein the plurality of MEMS are configured to convert the input analog signal into a mechanical signal and to convert the mechanical signal into an output signal, wherein each of plurality of MEMS has a tunable time constant controllable by voltage.

The analog system according to any preceding claim, wherein the first plurality of analog devices, the second plurality of analog devices, and the memory devices are part of a neural network, wherein each of the first plurality of analog devices and each of the second plurality of analog devices is a neuron in the neural network.

The analog system according to any preceding claim, wherein the neural network is a continuous time recurring neural network (CTRNN).

The analog system according to any preceding claim, wherein the first plurality of analog devices and the second plurality of analog devices of the CTRNN have different time constants to perform temporal learning and to adjust a time constant of the time constants.

The analog system according to any preceding claim, wherein the weight parameters are updated using difference target propagation in the CTRNN that uses an autoencoder type of architecture to establish intermediate targets, and wherein the weight parameters are updated based on local layer information so as to provide in-situ training to mitigate temporal drift in the first plurality of analog devices and the second plurality of analog devices of the CTRNN.

The analog system according to any preceding claim, wherein in-situ training of the CTRNN allows the CTRNN to learn its parameters based on individual analog edge device.

The analog system according to any preceding claim, wherein in-situ training of the CTRNN allows the CTRNN to recalibrate itself through re-learning to mitigate analog hardware drift due to environmental factors.

The analog system according to any preceding claim, wherein the analog drift due to the environmental factors includes changes to a time constant due to the environmental factors.

A method of processing an analog signal, the method comprising: inputting an input analog signal through an input port; receiving, by a first plurality of analog edge devices connected to input port, the input analog signal; outputting, by the first plurality of analog edge devices, a first plurality of output analog signals; receiving, by a second plurality of analog edge devices from the first plurality of analog edge devices, the first plurality of output analog signals; outputting, by the second plurality of analog edge devices, a second plurality of output analog signals; multiplying the second plurality of output analog signals by weight parameters stored on one or more memory devices in communication with the first plurality of analog edge devices and the second plurality of edges devices, to obtain a plurality of weighted analog signals, and outputting the plurality of weighted analog signals as an output analog signal through an output port.

The method according to any preceding claim, wherein the input analog signal has signal noise and the output analog signal corresponds to the input analog signal with the signal noise substantially reduced.

The method according to any preceding claim, further comprising applying a voltage to control a time constant of the first plurality of analog devices or the second plurality of analog devices, or both.

The method according to any preceding claim, further comprising updating the weight parameters using difference target propagation in a continuous time recurring neural network (CTRNN) including the first plurality of analog devices, the second plurality of analog devices, and the memory devices, and identifying the weight parameters using local layer information based on difference target propagation so as to provide in-situ training to mitigate a temporal drift in the first plurality of analog devices and the second plurality of analog devices of the CTRNN.

Although the foregoing description is directed to the preferred embodiments of the present disclosure, other variations and modifications will be apparent to those skilled in the art and may be made without departing from the disclosure. Moreover, features described in connection with one embodiment of the present disclosure may be used in conjunction with other embodiments, even if not explicitly stated above.

**Claims**

1. An analog system for edge artificial intelligence (AI) computing, the analog system comprising:

   an input port (210) configured to receive an input analog signal (100, 506, 604, 704);
   a first plurality of analog edge devices (102, 202) connected to the input port (210) and configured to receive the input analog signal (100, 506, 604, 704) and to output a first plurality of output analog signals (103);
   a second plurality of analog edge devices (104, 202) in communication with the first plurality of analog edge devices (102, 202), the second plurality of analog edge devices (104, 202) configured to receive the first plurality of output analog signals (103) from the first plurality of analog edge devices (102, 202) and to output a second plurality of output analog signals (105);
   at least one memory device (208) in communication with the first plurality of analog edge devices (102, 202) and the second plurality of analog edge devices (104, 202), the at least one memory device (208) configured to store weight parameters, the weight parameters being adjustable based on at least one of: pre-determined values from off-line training, or based on real-time updates through in-situ training; and
   an output port (212) configured to output an output analog signal (108), wherein the second plurality of output analog signals (105) are multiplied by the weight parameters to obtain a plurality of weighted analog signals, and the plurality of weighted analog signals are output through the output port (212) as the output analog signal (108).

2. The analog system of claim 1, wherein the at least one memory device (208) comprises one or more field programmable analog arrays (FPAAs) or one or more programmable analog memories.

3. The analog system of any preceding claim, wherein the first plurality of analog edge devices (102, 202) and the second plurality of analog edge devices (104, 202) are trained to find the weight parameters to operably reduce signal noise of the output analog signal (108).

4. The analog system of any preceding claim, further comprising:

   a plurality of electronic boards (204), each of the first plurality of analog edge devices (102, 202) and the second plurality of analog edge devices (104, 202) being connected to a corresponding electronic board (204) in the plurality of electronic boards (204); and
   a main electronic board (206), wherein the plurality of electronic boards (204) and the at least one memory device (208) are electrically connected to the main electronic board (206).

5. The analog system of any preceding claim, wherein the input analog signal (100, 506, 604, 704) has signal noise and the output analog signal (108) corresponds to the input analog signal (100, 506, 604, 704) with the signal noise substantially reduced.

6. The analog system of any preceding claim, wherein the input analog signal (100, 506, 604, 704) is an audio signal.

7. The analog system of any preceding claim, wherein the analog system is configured to perform AI computing using natural physical phenomena as computation primitives, without analog to digital conversion, and wherein the analog system is configured to perform AI computing at least two orders of magnitude faster in speed and at least two orders of magnitude lower in energy consumption when compared with conventional digital technology.

8. The analog system of any preceding claim, wherein the first plurality of analog edge devices (102, 202) or the second plurality of analog edge devices (104, 202), or both, comprise a plurality of micro-electro-mechanical systems (MEMS) devices (202, 300, 400).

9. The analog system of claim 8, wherein the plurality of MEMS devices (202, 300, 400) are configured to convert the input analog signal (100, 506, 604, 704) into a mechanical signal and to convert the mechanical signal into an output analog signal (108), wherein each of the plurality of MEMS devices (202, 300, 400) has a tunable time constant controllable by voltage.

10. The analog system of any preceding claim, wherein the first plurality of analog edge devices (102, 202), the second

**EP 4 700 598 A1**

plurality of analog edge devices (104, 202), and the at least one memory device (208) are part of a neural network (201, 602), wherein each of the first plurality of analog edge devices (102, 202) and each of the second plurality of analog edge devices (104, 202) is a neuron in the neural network (201, 602).

11. The analog system of claim 10, wherein the neural network (201, 602) is a continuous time recurring neural network (CTRNN).

12. The analog system of claim 11, wherein the first plurality of analog edge devices (102, 202) and the second plurality of analog edge devices (104, 202) of the CTRNN have different time constants to perform temporal learning and to adjust a time constant of the different time constants.

13. The analog system of claim 12, wherein the weight parameters are updated using difference target propagation in the CTRNN that uses an autoencoder type of architecture to establish intermediate targets, and wherein the weight parameters are updated based on local layer information so as to provide in-situ training of the CTRNN to mitigate temporal drift in the first plurality of analog edge devices (102, 202) and the second plurality of analog edge devices (104, 202) of the CTRNN.

14. The analog system of claim 13, wherein the in-situ training of the CTRNN allows the CTRNN to learn its parameters based on individual analog edge device (102, 104, 202).

15. A method of processing an analog signal, the method comprising:

receiving an input analog signal (100, 506, 604, 704) at an input port (210);
receiving, by a first plurality of analog edge devices (102, 202) connected to the input port (210), the input analog signal (100, 506, 604, 704);
outputting, by the first plurality of analog edge devices (102, 202), a first plurality of output analog signals (103);
receiving, by a second plurality of analog edge devices (104, 202) from the first plurality of analog edge devices (102, 202), the first plurality of output analog signals (103);
outputting, by the second plurality of analog edge devices (104, 202), a second plurality of output analog signals (105);
multiplying the second plurality of output analog signals (105) by weight parameters stored on at least one memory device (208) in communication with the first plurality of analog edge devices (102, 202) and the second plurality of edges devices (104, 202), to obtain a plurality of weighted analog signals, the weight parameters being adjustable based on at least one of: pre-determined values from off-line training, or based on real-time updates through in-situ training;
outputting the plurality of weighted analog signals as an output analog signal (108) through an output port (212); and
comparing the output analog signal (108) with a ground truth analog signal (506) to modify the weight parameters for successive multiplying, wherein the modified weight parameters reduce an error between the output analog signal (108) and the ground truth analog signal (506).

15

**FIG. 1**

200

212

203

204

201

202

202

206

203

209

208

210

**FIG. 2**

300 ⤸

**FIG. 3**

400 ⤸

**FIG. 4**

**FIG. 5**

**FIG. 6**

**FIG. 7**

FIG. 8

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Lin David ET AL: "A MEMS-BASED ANALOG COMPUTER FOR EDGE AI COMPUTING", Solid-State Sensors, Actuators, and Microsystems Workshop, 6 June 2024 (2024-06-06), pages 30-33, XP093334794, Hilton Head Island, South Carolina DOI: 10.31438/TRF.HH2024.8 Retrieved from the Internet: URL:https://transducer-research-foundation.org/technical_digests/HiltonHead_2024/hh2024_030.pdf * abstract * * page 31, right-hand column, line 9 - line 12 * * page 32, left-hand column, line 3 - line 7 * * page 32, left-hand column, line 32 - line 44 * * page 32, right-hand column, line 34 - line 37 * * page 32, right-hand column, line 46 - line 47 * * figures 3,5,7 * | 1-15 | INV. G06F16/245 G06N3/00 |

-----

-/--

TECHNICAL FIELDS
SEARCHED      (IPC)

G06F
G06N

The present search report has been drawn up for all claims

| Place of search | Date of completion of the search | Examiner |
|---|---|---|
| Berlin | 12 November 2025 | Pose Rodríguez, J |

EPO FORM 1503 03.82 (P04C01)

page 1 of 3

Europäisches
Patentamt

European
Patent Office

Office européen
des brevets

# EUROPEAN SEARCH REPORT

**Application Number**

EP 25 18 3746

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EMAD-UD-DIN MUHAMMAD ET AL: "Simulation for a Mems-Based CTRNN Ultra-Low Power Implementation of Human Activity Recognition",<br>FRONTIERS IN DIGITAL HEALTH,<br>vol. 3, 22 September 2021 (2021-09-22),<br>pages 1-12, XP093335074,<br>ISSN: 2673-253X, DOI:<br>10.3389/fdgth.2021.731076<br>Retrieved from the Internet:<br>URL:https://pmc.ncbi.nlm.nih.gov/articles/PMC8522023/pdf/fdgth-03-731076.pdf><br>* abstract *<br>* page 5, right-hand column, line 35 - page 6, left-hand column, line 3 *<br>* figure 1 * | 1,15 | |
| X | DEMASIUS KAI-UWE ET AL: "Energy-efficient memcapacitor devices for neuromorphic computing",<br>NATURE ELECTRONICS,<br>vol. 4, no. 10,<br>11 October 2021 (2021-10-11), pages 748-756, XP093335077,<br>ISSN: 2520-1131, DOI:<br>10.1038/s41928-021-00649-y<br>Retrieved from the Internet:<br>URL:https://www.nature.com/articles/s41928-021-00649-y><br>* abstract *<br>* figure 1 *<br>* page 748, right-hand column, line 4 - page 749, right-hand column, line 12 * | 1,15 | **TECHNICAL FIELDS SEARCHED (IPC)** |

-/--

The present search report has been drawn up for all claims

| Place of search | Date of completion of the search | Examiner |
|---|---|---|
| Berlin | 12 November 2025 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALSALEEM FADI M ET AL: "A MEMS Nonlinear Dynamic Approach for Neural Computing", JOURNAL OF MICROELECTROMECHANICAL SYSTEMS, IEEE SERVICE CENTER, US, vol. 27, no. 5, 1 October 2018 (2018-10-01), pages 780-789, XP011690902, ISSN: 1057-7157, DOI: 10.1109/JMEMS.2018.2864175 [retrieved on 2018-10-01] * the whole document * | 1-15 | |

TECHNICAL FIELDS
SEARCHED     (IPC)

The present search report has been drawn up for all claims

| Place of search | Date of completion of the search | Examiner |
|---|---|---|
| Berlin | 12 November 2025 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63684581
- US 24111725